# EUROPÄISCHE PATENTANMELDUNG

(11) **EP 2 009 740 A1**
(43) Veröffentlichungstag der Anmeldung: **31.12.2008**
(21) Anmeldenummer: 08159291.7
(22) Anmeldetag: 27.06.2008
(51) Int. Cl.: H01Q 15/00

(54) **Metamaterial**

(30) Priorität: 27.06.2007 DE 102007029691
(71) Anmelder: Technische Universität München, 80333 München (DE)
(72) Erfinder: Zedler, Michael, 80804 München (DE); Russer, Peter, 81929 München (DE)
(74) Vertreter: Herrmann, Franz

(57) **Zusammenfassung**

Es wird ein Metamaterial mit einer Vielzahl von sich im Raum wiederholender Basiszellen (8) vorgeschlagen, die jeweils eine dreidimensionale Leiterbahnstruktur aufweisen, die auf wenigsten drei in einem Stapel übereinander angeordneten Leiterbahnschichten (11-15) verteilt ist.

## Beschreibung

Die Erfindung betrifft ein Metamaterial mit einer Vielzahl von sich wiederholenden Basiszellen, die jeweils eine dreidimensionale Leiterbahnstruktur aufweisen, die für elektromagnetische Wellen mit in drei Raumdimensionen weisenden Wellenausbreitungsrichtungen das für das Metamaterial charakteristische Transmissionsverhalten zeigt.

Ein derartiges Metamaterial ist aus der WO 2007/073716 A1 bekannt. Das bekannte Metamaterial ist aus einer Vielzahl von Basiszellen zusammengesetzt, die jeweils über eine Vielzahl von Toren mit jeweils zwei Polen verfügen. Die Pole der Tore sind innerhalb der Basiszelle über Koppelkapazitäten und induktive Leitungen verbunden. Mit dem bekannten Metamaterial sind elektromagnetische Wellen in jede Raumrichtung mit dem für die Eigenschaft als Metamaterial charakteristischen Transmissionsverhalten transmittierbar.

Metamateriale sind künstliche Strukturen, welche in bestimmten Frequenzbereichen sowohl effektive Dielektrizitätskoeffizienten als auch effektive Permeabilitätskoeffizienten aufweisen, die kleiner 1 oder auch negativ sind. Eine ausführliche Übersicht über Metamaterialien wird zum Beispiel in der Veröffentlichung von LAI, A. und ITOH, T.: Composite right/left-handed transmission line metamaterials, in IEEE, Microwave Magazin, September 2004, Seite 34-50 gegeben.

Mithilfe von Metamaterialien lassen sich grundsätzlich Linsen konstruieren, deren Auflösung unterhalb der Auflösungsgrenze von λ/2 liegt. Ferner sind Antennen denkbar, die eine höhere Empfindlichkeit als herkömmliche Antennen aufweisen. Schließlich erscheint es auch möglich, mit Metamaterialien auf einen Körper auftreffende Strahlung reflektionsfrei um den Körper herumzuführen, so dass der Körper nicht anhand der zurück reflektierten oder gestreuten Anteile der einfallenden elektromagnetischen Strahlung detektiert werden kann. Die Verwendung von Metamaterialien in der Praxis setzt jedoch voraus, dass die Metamaterialien effektiv gefertigt werden können, da für die praktische Anwendung große Stückzahlen von Basiszellen benötigt werden.

Weiter ist aus der Veröffentlichung IYER, A. K. und ELEFTHE-RIADES, G. V.: "Volumetric layered transmission-line metamaterial exhibiting a negative refractive index", J. Opt. Soc. Am. B, Vol. 23, No. 3, März 2006, Seiten 553 - 580 ein Metamaterial in Schichtaufbau bekannt, das das für ein Metamaterial charakteristische Transmissionsverhalten nur bei einer Wellenausbreitungsrichtung in Schichtebene zeigt.

Ausgehend von diesem Stand der Technik liegt der Erfindung daher die Aufgabe zugrunde, ein Metamaterial zu schaffen, das auf einfache Weise mit einer Vielzahl von Basiszellen gefertigt werden kann.

Diese Aufgabe wird durch ein Metamaterial mit den Merkmalen des unabhängigen Anspruchs gelöst. In davon abhängigen Ansprüchen sind vorteilhafte Ausgestaltungen und Weiterbildungen angegeben.

Bei dem Metamaterial ist die Leiterbahnstruktur einer Basiszelle auf wenigsten drei in einem Stapel übereinander angeordneten Leiterbahnenschichten verteilt. Unter Basiszellen soll in diesem Zusammenhang die kleinste sich im Metamaterial periodisch wiederholende dreidimensionale Struktureinheit verstanden werden. Durch die Verteilung der Leiterbahnstruktur der Basiszelle auf wenigstens drei in einem Stapel übereinander angeordnete Leiterbahnschichten ist es möglich, dreidimensionale Leiterbahnstrukturen von Basiszellen, die gegenüber elektromagnetischen Wellen das für die Eigenschaft als Metamaterial charakteristische Transmissionsverhalten in mehr als zwei Dimensionen zeigen, in einen Stapel von Leiterbahnschichten abzubilden, der mit den üblichen Verfahren der Halbleiter- und Mikrosystemtechnik hergestellt werden kann. Mithilfe dieser Verfahren lässt sich insbesondere eine Großzahl von Leiterbahnstrukturen verschiedener Basiszellen nebeneinander und übereinander ausbilden. Insofern ist das Metamaterial auf einfache Weise mit einer Vielzahl von Basiszellen herstellbar.

Bei einer Ausführungsform des Metamaterials wiederholt sich die Schichtenfolge einer Basiszelle in Stapelrichtung in periodischen Abständen. Auf diese Weise ist es möglich, eine Vielzahl von Basiszellen übereinander gestapelt auszubilden.

Zwischen den Leiterbahnschichten der Leiterbahnstruktur sind vorzugsweise dielektrische Abstandsschichten angeordnet. Derartige dielektrische Abstandsschichten sind mit üblichen Materialien, die in der Halbleiter- und Mikrosystemtechnik verwendet werden, auf einfache Weise herstellbar.

In der Regel wird dabei der Raum zwischen den Leiterschichten vollständig von den dielektrischen Abstandsschichten gefüllt.

Bei einer bevorzugten Ausführungsform ist die Leiterbahnstruktur einer Basiszelle invariant gegen die Punktsymmetriegruppe D₄ₕ, da sich mit einer derartigen Leiterbahnstruktur insbesondere kubische Leiterbahnstrukturen der Punktsymmetriegruppe Oₕ nachbilden lassen. Es sei angemerkt, dass die Punktsymmetriegruppen hier und im Folgenden in der Schönflies-Notation angegeben sind.

Eine derartige Basiszelle verfügt über eine Grundschicht, eine Zwischenschicht und eine Deckschicht. In der Grundschicht und in der Deckschicht sind in den Ecken der Basiszelle jeweils Kapazitätsflächen angeordnet, die über induktive Komponenten mit einem in der Zwischenschicht angeordneten gemeinsamen Knotenpunkt verbunden sind.

Die Koppelung zwischen nebeneinander angeordneten Basiszellen kann jeweils in der Grundschicht und Deckschicht mithilfe von interdigitalen Kapazitäten zwischen den Leiterbahnstrukturen der Basiszellen bewerkstelligt werden. Die Koppelung zwischen übereinander angeordneten Basiszellen erfolgt dann zwischen den Kapazitätsflächen der Grundschicht und der Deckschicht.

Daneben ist es möglich, zwischen der Grundschicht und der Deckschicht von in Stapelrichtung übereinander angeordnete Basiszellen eine weitere Koppelschicht vorzusehen, in der Kapazitätsflächen ausgebildet sind, die die Kapazitätsflächen, die in der Grundschicht und in der Deckschicht in den Ecken benachbarter Basiszellen angeordnet sind, kapazitiv koppeln. Durch die Kapazitätsflächen in der Koppelschicht werden somit sowohl bezüglich der Stapelrichtung nebeneinander als auch übereinander gestapelte Basiszellen kapazitiv gekoppelt.

Bei einer weiteren Ausführungsform des Metamaterials ist die Leiterbahnstruktur der Basiszelle invariant gegen die Punktsymmetriegruppe S₂. Mit einem derartigen Metamaterial lässt sich die Leiterbahnstruktur kubischer Basiszellen mit der Punktsymmetriegruppe T_{H} nachbilden.

Ein derartiges Metamaterial weist eine zwischen Grundschicht und Deckschicht angeordnete Zwischenschicht auf, in der sich zwei nebengeordnete Kapazitätsflächen befinden, die über eine induktive Komponente gekoppelt sind. In der Deckschicht und in der Grundschicht sind jeweils Kapazitätsflächen ausgebildet, die mit den Kapazitätsflächen der Zwischenschicht kapazitiv gekoppelt sind. Die in der Grundschicht und der Deckschicht ausgebildeten Kapazitätsflächen sind wiederum durch induktive Komponenten mit jeweils einer unter der Grundschicht oder oberhalb der Deckschicht liegenden zugeordneten Kapazitätsfläche verbunden. Letztere Kapazitätsflächen liegen in Koppelschichten von denen sich eine unterhalb der Grundschicht und eine weitere oberhalb der Deckschicht befindet.

In den Koppelschichten wird mithilfe von interdigitalen Kapazitäten die Koppelung zu benachbarten Basiszellen hergestellt.

Daneben ist es möglich, die Koppelung zwischen benachbarten Basiszellen über eine weitere Koppelschicht durch eine Koppelzwischenschicht zu bewerkstelligen, über die die in den Koppelschichten angeordneten Kapazitätsflächen benachbarter Basiszellen kapazitiv gekoppelt sind.

Die induktiven Elemente können insbesondere dünne Leiterbahnen sein, deren Verlauf an die jeweils erforderliche Induktivität angepasst ist. Ferner können zusätzliche induktive Komponenten zur Erhöhung der Induktivität vorgesehen sein.

Die induktiven Komponenten können daneben auch Durchkontaktierungen durch die dielektrischen Abstandsschichten umfassen.

Weitere Einzelheiten und Vorteile der Erfindung gehen aus der nachfolgenden Beschreibung hervor, in der die Erfindung anhand der beigefügten Zeichnung im Einzelnen erläutert wird. Es zeigen:
- Figur 1: eine Leiterbahnstruktur eines Metamaterials;
- Figur 2: einen Schnitt durch ein planares Metamaterial, das eine in einem Schichtenstapel angeordnete Leiterbahnstruktur aufweist, die zu der Leiterbahnstruktur des Metamaterials aus Figur 1 elektrisch äquivalent ist;
- Figur 3: eine Aufsicht auf einzelne Schichten des Schichtenstapels aus Figur 2;
- Figur 4: eine Aufsicht auf eine Grundschicht vier benachbarter Basiszellen des Schichtenstapels aus Figur 2;
- Figur 5: eine Aufsicht auf eine Koppelschicht vier benachbarter Basiszellen des Schichtenstapels aus Figur 2;
- Figur 6: eine Aufsicht auf einzelne Schichten der Schichtenfolge eines abgewandelten planaren Metamaterials mit Schichtstruktur;
- Figur 7: eine Aufsicht auf eine Grundschicht des Metamaterials aus Figur 6;
- Figur 8: ein Diagramm mit der Dispersionsrelation eines Metamaterials gemäß den Figuren 2 bis 5;
- Figur 9: eine Teilansicht auf die Leiterbahnstruktur einer dreidimensionalen Basiszelle eines weiteren Metamaterials;
- Figur 10: eine Aufsicht auf einzelne Schichten der Schichtenfolge eines Metamaterials, dessen Leiterbahnstruktur elektrisch äquivalent zu der Leiterbahnstruktur des Metamaterials aus Figur 9 ist; und
- Figur 11: eine Aufsicht auf einzelne Schichten der Schichtenfolge eines weiteren Metamaterials, dessen Leiterbahnstruktur zu der Leiterbahnstruktur des Metamaterials aus Figur 9 elektrisch äquivalent ist.

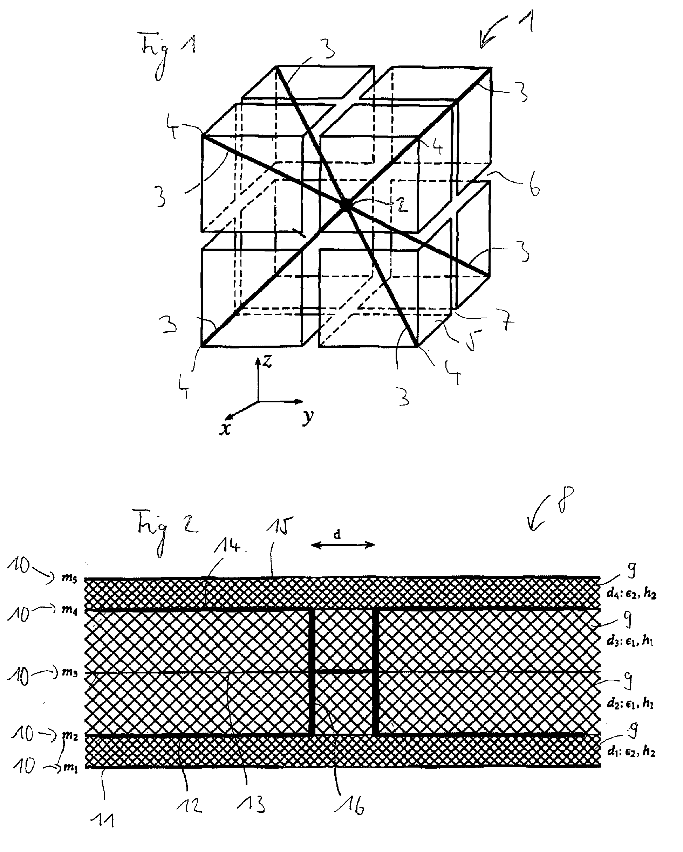

Figur 1 zeigt die perspektivische Ansicht der Leiterbahnstruktur einer dreidimensionalen Basiszelle 1 eines Metamaterials. Die Basiszelle 1 stellt die kleinste Struktureinheit dar, die sich im Metamaterial periodisch fortsetzt. Die in Figur 1 dargestellte Leiterbahnstruktur ist als solche aus der WO 2007/073716 A1 bekannt. Die Basiszelle 1 ist würfelförmig ausgebildet und weist einen zentralen Knotenpunkt 2 auf. Vom Knotenpunkt 2 aus führen induktive Leitungen 3 zu Ecken 4 der Basiszelle 1. Im Bereich der Ecken 4 sind die induktiven Leitungen 3 mit Kapazitätsflächen 5 verbunden. Dabei sind jeweils vier an verschiedene induktive Leitungen 3 angeschlossene Kapazitätsflächen 5 auf einer Seitenfläche 6 der Basiszelle 1 angeordnet. Entgegen der Darstellung in Figur 1 sind die Kapazitätsflächen 5 lediglich in den Ecken 4 untereinander und mit den induktiven Leitungen 3 verbunden. Ansonsten sind die Kapazitätsflächen 5 entlang von Kanten 7 der Basiszelle 1 untereinander getrennt.

Durch eine Vielzahl von nebeneinander und gegebenenfalls auch übereinander angeordneten Basiszellen von der Art der Basiszelle 1 ergibt sich ein Metamaterial, das in einem bestimmten Frequenzbereich einen negativen Brechungsindex oder einen Brechungsindex kleiner 1 aufweist. Allerdings ist die Herstellung des Metamaterials in der Praxis nicht einfach, da eine sehr große Zahl der Basiszellen 1 hergestellt und untereinander verbunden werden muss. Typischerweise müssen für praktische Anwendungen Metamaterialien hergestellt werden, bei denen die Anzahl von Basiszellen 1 in der Größenordnung 10⁵ liegen.

Figur 2 zeigt einen Querschnitt durch eine Basiszelle 8 eines Metamaterials, dessen Leiterbahnstruktur einen geschichteten planaren Aufbau aufweist. Die Basiszelle umfasst vier dielektrische Lagen 9 dielektrischen Materials, die im Einzelnen in Stapelrichtung aufeinander folgend mit d₁, d₂, d₃, d₄ bezeichnet sind. Die Lagen d₁ und d₄ weisen dabei die Dielektrizitätskonstante ε₂ auf, und die Lagen d₂ und d₃ die Dielektrizitätskonstante ε₁. Die Lagen d₁ und d₄ haben die Dicke h₂ und die Lagen d₂ und d₃ haben jeweils die Dicke h₁. Zwischen den dielektrischen Lagen 9 sind Metallisierungsschichten 10 ausgebildet. In Stapelrichtung zu unterst liegt dabei eine untere Koppelschicht 11, auf die eine Grundschicht 12, eine Zwischenschicht 13, eine Deckschicht 14 und eine obere Koppelschicht 15 folgen. Die untere Koppelschicht 11, die Grundschicht 12, die Zwischenschicht 13, die Deckschicht 14 und die obere Koppelschicht 15 sind in Figur 2 jeweils mit m₁ bis m₅ indexiert. Es sei angemerkt, dass sich in diesem Zusammenhang Höhenangaben jeweils auf die Stapelrichtung beziehen.

Die Metallisierungsschichten 10 können durch die üblichen Verfahren der Halbleiter- und Mikrosystemtechnik auf die dielektrischen Lagen 9 aufgebracht und dort strukturiert werden. Außerdem können die Metallisierungsschichten 10 über die dielektrischen Lagen 9 hinweg mithilfe von Durchkontaktierung 16 verbunden werden.

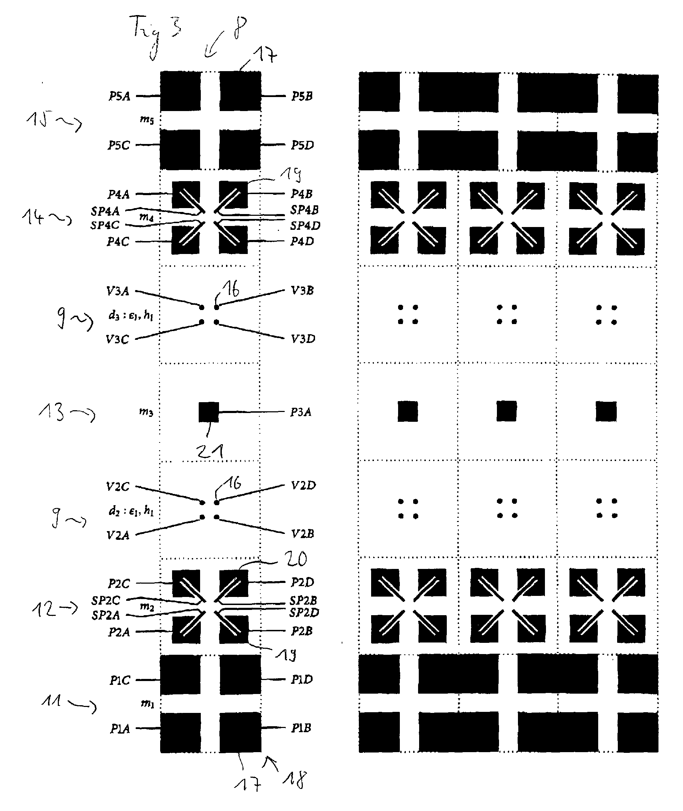

Figur 3 enthält eine Darstellung der Metallisierungsschichten 10 und von denjenigen dielektrischen Lagen 9, in denen Durchkontaktierungen 16 ausgebildet sind. In der Metallisierungsschicht m₁, die gleich der unteren Koppelschicht 11 ist, sind vier Kapazitätsflächen 17 ausgebildet, die in Figur 3 mit P1A, P1B, P1C und P1D bezeichnet sind. Die Kapazitätsflächen 17 setzen sich in die benachbarten Basiszellen 8 fort, so dass vier in einer Ecke 18 aneinander grenzende Basiszellen 1 eine gemeinsame Kapazitätsfläche 17 aufweisen. In der durch die dielektrische Lage d₁ von der Metallisierungsschicht m₁ getrennten Metallisierungsschicht m₂ sind weitere Kapazitätsflächen 19 angeordnet, die in Figur 3 die Bezeichnung P2A, P2B, P2C, P2D tragen. In einem zentralen Bereich sind die Kapazitätsflächen 19 jeweils mit induktiven Leitungen 20 verbunden, die im Bereich der Kapazitätsflächen 19 freigespart sind. Die induktiven Leitungen 20 sind in Figur 3 auch mit der Bezeichnung SP2A bis SP2D bezeichnet. Die induktiven Leitungen 20 münden in die Durchkontaktierungen 16, in Figur 13 mit V2A bis V2D gekennzeichnet. Die Durchkontaktierungen 16 gehen durch die dielektrische Lage d₂ hindurch und münden in eine Knotenfläche 21, die in Figur 3 mit P3A bezeichnet ist. Die dielektrische Lage d₃ mit den Durchkontaktierungen 16 sowie die Metallisierungsschichten m₄ und m₅, die der Deckschicht 14 und der oberen Koppelschicht 15 entsprechen, sind bezüglich der Metallisierungsschicht m₃ symmetrisch zu der dielektrischen Lage d₂ sowie den Metallisierungsschichten m₂ und m₁ aufgebaut.

Die Basiszelle 8 ist zu der Basiszelle 1 aus Figur 1 elektrisch äquivalent. Insofern wird die Basiszelle 1 mit der Punktsymmetrie Oₕ auf der planaren Leiterbahnstruktur der Basiszelle 8 mit der Punktsymmetrie D₄ₕ abgebildet.

Durch die Koppelschichten 11 und 15 werden auch übereinander gestapelte Basiszellen 8 miteinander verkoppelt. Beispielsweise verkoppelt die Kapazitätsfläche 17 mit der Bezeichnung P1A kapazitiv die über der Kapazitätsfläche 17 liegende Kapazitätsfläche 19 mit der Bezeichnung P2A mit der darunter liegenden Kapazitätsfläche 19 mit der Bezeichnung P4A der darunter liegenden Basiszelle 8.

Die Metallisierungen in der unteren Koppelschicht 11 und der unteren Koppelschicht 15 sind identisch, wobei die obere Koppelschicht 15 einer unten liegenden Basiszelle 8 gleich der unteren Koppelschicht 11 einer oben liegenden Basiszelle 8 ist. Es ist daher nur notwendig, in jeder Basiszelle 8 entweder die untere Koppelschicht 11 oder die obere Koppelschicht 15 auszubilden.

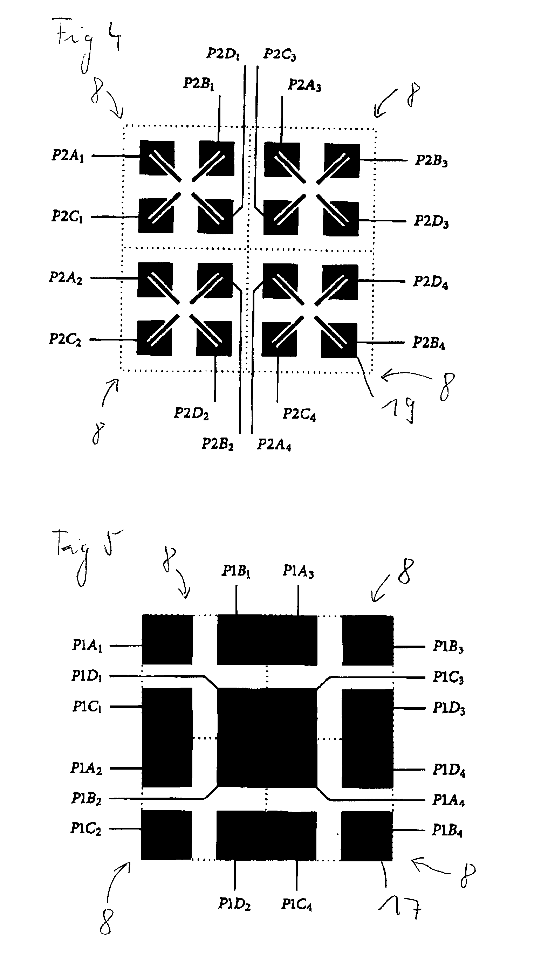

In Figur 4 ist die Struktur der Grundschicht 12 in vier aneinander grenzenden Basiszellen 8 dargestellt. Figur 5 zeigt die Strukturierung der unteren Koppelschicht 11 von vier aneinander grenzenden Basiszellen 8. Die Zugehörigkeit zu den einzelnen Basiszellen ist in den Figuren 4 und 5 jeweils durch den von eins bis vier laufenden Index angegeben. Die Kapazitätsflächen 17 mit den Bezeichnungen P1D₁, P1B₂, P1A₄ und P1C₃ von vier aneinander grenzenden Basiszellen 8 bilden eine zusammenhängende Metallisierungsfläche. Diese Metallisierungsfläche verkoppelt die darüberliegenden Kapazitätsflächen 19 mit der Bezeichnung P2D₁, P2B₂, P1A₄ und P2C₃ sowie die darunterliegenden Koppelflächen 19 mit den Bezeichnungen P4D₁, P4B₂, P4A₄ und P4C₃ untereinander kapazitiv.

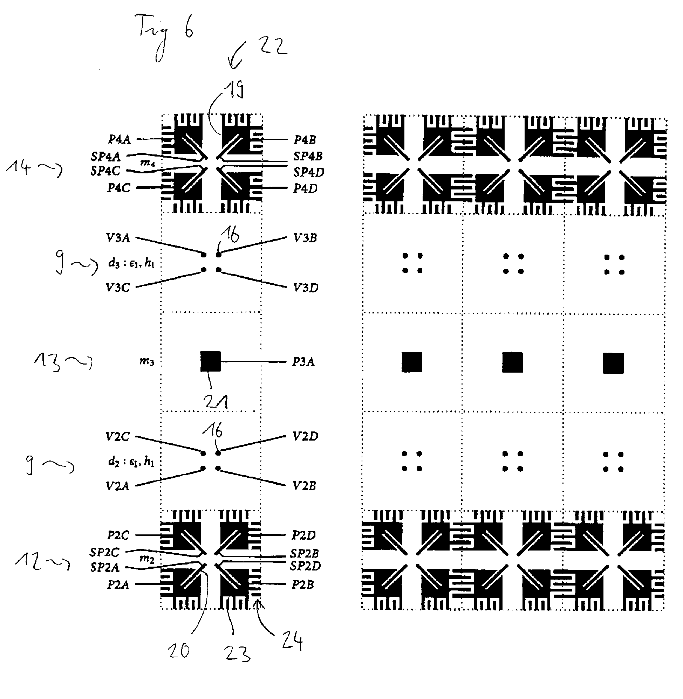

In Figur 6 ist eine Schichtenfolge einer abgewandelten Basiszelle 22 dargestellt, bei der auf die untere Koppelschicht 11 und die obere Koppelschicht 15 verzichtet worden ist. Um die kapazitive Koppelung zwischen benachbarten Zellen sicherzustellen sind bei der Basiszelle 22 Kapazitätsflächen 19 durch Kapazitätsflächen 23 ersetzt, an deren äußeren Rändern Interdigitalstruktur 24 ausgebildet sind.

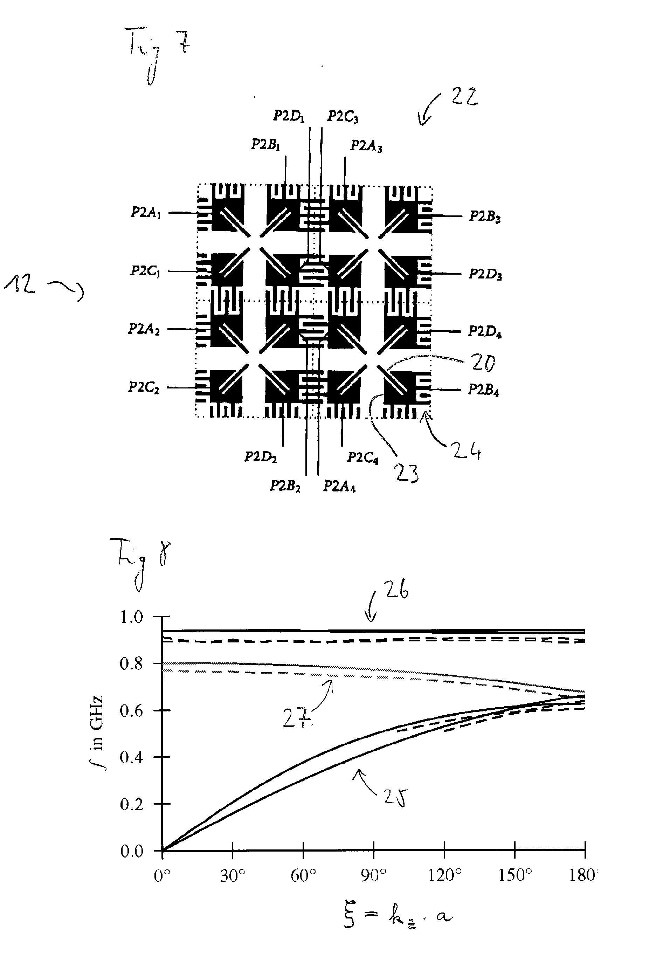

In Figur 7 ist die Metallisierung der unteren Koppelschicht 11 von vier nebeneinander angeordneten Basiszellen 22 dargestellt. Anhand Figur 7 ist erkennbar, wie die Kapazitätsfläche 23 mit der Bezeichnung P2D₂ mit der Kapazitätsfläche 23 mit der Bezeichnung P2C₄ durch die Interdigitalstruktur 24 verkoppelt ist. Außerdem ist die Verkopplung der Kapazitätsflächen 23 mit der Bezeichnung P2B₂, P2A₄, P2D₁ und P2C₃ durch die Interdigitalstruktur 24 erkennbar. Die kapazitive Verkoppelung der Basiszellen 22 in Stapelrichtung erfolgt unmittelbar zwischen den Kapazitätsflächen 23, so dass die dielektrischen Lagen 9 mit der Bezeichnung d₁ und d₄ zu einer gemeinsamen dielektrischen Lage 9 zusammengefasst werden können. Dies bietet den zusätzlichen Vorteil, dass die Anforderungen an die Toleranzen bei der Fertigung der dielektrischen Lagen 9 gelockert werden können, da lediglich eine dielektrische Lage 9 gefertigt werden muss.

Figur 8 zeigt ein Dispersionsdiagramm, das die Ergebnisse von Simulationsrechnungen zur Bestimmung der Dispersionsrelation für ein Metamaterial mit Basiszellen 8 zeigt. Die Abszisse gibt dabei die Frequenz wieder, während die Ordinate die Phasendrehung ξ darstellt. Für die Phasendrehung gilt ξ = k_{z}·a, wobei a die Ausdehnung der Basiszelle 1 entlang der z-Richtung ist, die gleich der Stapelrichtung ist.

Für die Simulation wurde a = 20 mm und h₁ = 5 mm, h₂ = 1 mm, ε₁ = 1 und ε₂ = 10 gewählt. Für die Simulation wurden zwei verschiedene Simulationsprogramme verwendet, deren Ergebnisse jeweils mit gestrichelten Linien und durchgezogenen Linien in das Diagramm in Figur 8 eingetragen sind. Anhand Figur 8 ist erkennbar, dass neben der rechtshändigen Moden 25 und einem numerischen Artefakt 26 eine linkshändige Mode 27 im Frequenzbereich zwischen 600 und 800 MHz vorhanden ist. Die linkshändige Mode zeigt eine negative Steigung, was eine negative Gruppengeschwindigkeit zur Folge hat. Eine negative Gruppengeschwindigkeit ist aber typisch für Metamaterialien mit negativem Brechungsindex. Die Ergebnisse zeigen, dass bei einer Wellenausbreitung in Stapelrichtung das auf der Grundlage der Basiszelle 8 hergestellte Metamaterial in einem bestimmten Frequenzbereich das für Metamaterialien typische Transmissionsverhalten aufweist. Ähnliche Ergebnisse ergeben sich bei einer Untersuchung der Wellenausbreitung in x-Richtung und y-Richtung, die sich in der Schichtebene erstrecken. Somit weist ein auf der Grundlage der Basiszelle 8 hergestelltes Metamaterial nicht nur bei einer Wellenausbreitung entlang der Schichtebene, sondern auch bei einer Wellenausbreitung in Stapelrichtung ein für Metamaterialien typisches Transmissionsverhalten auf.

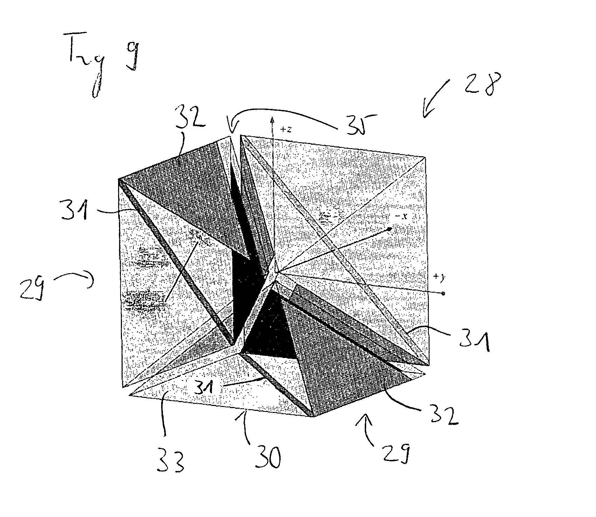

Figur 9 ist eine Teilansicht einer weiteren Leiterbahnstruktur einer weiteren Basiszelle 28. Der Übersichtlichkeit halber sind lediglich drei Teilstrukturen 29 dargestellt, obwohl die vollständige Leiterbahnstruktur der in Figur 9 dargestellten Basiszelle 28 sechs dieser Teilstrukturen 29 umfasst. Jede der Teilstrukturen 29 weist eine entlang der Diagonale eine Außerfläche 30 verlaufende induktive Leitung 31 auf. Die induktiven Leitungen 39 sind dabei so angeordnet, dass die induktiven Leitungen 39 auf gegenüberliegenden Außenseiten 30 parallel verlaufen. Die induktiven Leitungen 31 verbinden jeweils zwei dreieckförmige Kapazitätsflächen 32, die jeweils einer zugeordneten Kapazitätsfläche 32 einer benachbarten Teilstruktur 29 gegenüberliegen. Die beiden Kapazitätsflächen 32 einer Teilstruktur 29 verlaufen dabei so, als wären sie jeweils auf einer Seitenfläche 33 einer Pyramide 34 angeordnet, deren Grundfläche mit der Außenseite 30 der Basiszelle 28 übereinstimmt.

Es sei angemerkt, dass die einander gegenüberliegende Kapazitätsflächen 32 in einem Abstand 35 angeordnet sind. Ferner sind die Kapazitätsflächen 32 entlang den Kanten der Pyramide 34 beabstandet.

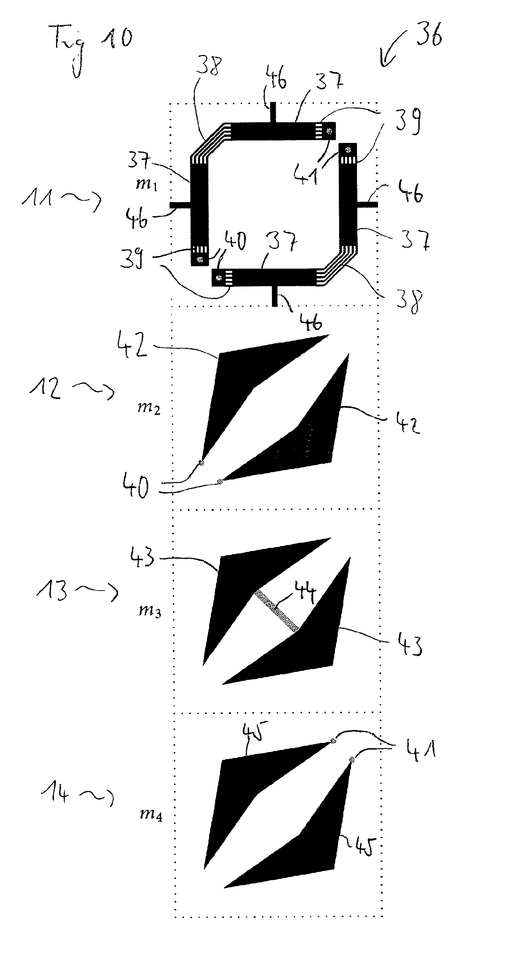

In Figur 10 sind die Schichten einer Basiszelle 36 dargestellt, mit der sich die Leiterbahnstruktur der Basiszelle 28 aus Figur 9 in einem planaren Schichtaufbau realisieren lässt. Die Basiszelle 36 verfügt in der Koppelschicht 11 über vier sich entlang den Außenkanten der Basiszelle 36 erstreckende Kapazitätsflächen 37, von denen je zwei durch eine Interdigitalstruktur 38 kapazitiv gekoppelt sind. An den der Interdigitalstruktur 38 gegenüberliegenden Seiten sind die Kapazitätsflächen 37 über eine weitere Interdigitalstruktur 39 sowohl mit Durchkontaktierungen 40, die zu der darüberliegenden Grundschicht 12 führen, als auch mit Durchführungen 41 verbunden, die zu einer darunterliegenden Deckschicht 14 führen.

In der darüberliegenden Grundschicht 12 sind die Durchkontaktierungen 40 an jeweils zwei schwalbenschwanzförmige Kapazitätsflächen 42 angeschlossen. Die Kapazitätsflächen 42 sind dabei jeweils mit der konvexen Innenseite einander zugewandt angeordnet. Außerdem verläuft die konvexe Innenseite der Kapazitätsflächen 42 jeweils entlang der Diagonalen der Basiszelle 36.

Die Kapazitätsflächen 42 decken oder überlagern sich mit Kapazitätsflächen 43, die in der Zwischenschicht 13 ausgebildet sind. Die bei der Basiszelle 36 gemäß Figur 10 ebenfalls schwalbenschwanzförmig ausgebildeten Kapazitätsflächen 43 sind durch eine zentrale induktive Leitung 44 verbunden, die jeweils an den Knickpunkt der konvexen Innenseite der Kapazitätsflächen 43 angesetzt sind. In der darüberliegenden Deckschicht 14 befinden sich schließlich weitere Kapazitätsflächen 45, die sich mit den Kapazitätsflächen 43 decken oder diese zumindest teilweise überlagern. Bei dem in Figur 10 dargestellten Ausführungsbeispiel sind die Kapazitätsflächen 45 ebenfalls schwalbenschwanzförmig ausgebildet.

Die Kapazitätsflächen 45 sind schließlich über die Durchkontaktierungen 41 mit einer in Figur 10 nicht dargestellten weiteren Koppelschicht verbunden, deren Metallisierung der Metallisierung der Koppelschicht 11 entspricht.

Bei der Basiszelle 36 gemäß Figur 10 erfolgt die Verbindung zwischen nebeneinander liegenden Basiszellen über induktive Leitungen 46, die in der Koppelschicht 11 an die Kapazitätsflächen 37 angesetzt sind und die Kapazitätsflächen 37 benachbarter Basiszellen 36 verbinden. Übereinander liegende Basiszellen 36 sind dagegen durch die Durchkontaktierungen 40 und 41 miteinander verbunden.

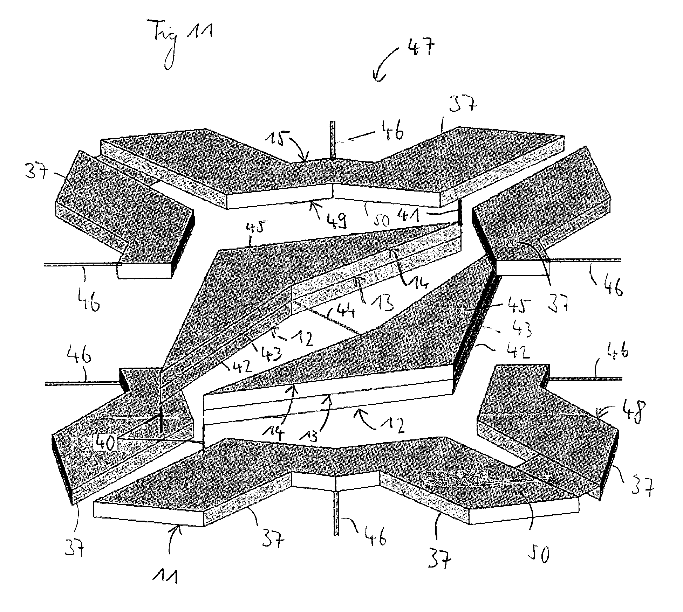

Figur 11 zeigt eine weitere Basiszelle 47, bei der zwischen der unteren Koppelschicht 11 und der Grundschicht 12 eine untere innere Koppelschicht 48 und zwischen Deckschicht 14 und oberen Koppelschicht 15 eine obere innere Koppelschicht 49 eingezogen ist. In der unteren äußeren Koppelschicht 11 und der oberen äußeren Koppelschicht 15 sind die Elektroden 37 mit den zu benachbarten Basiszellen 47 führenden induktiven Leitungen 46 angeordnet. In der unteren inneren Koppelschicht 48 und der oberen inneren Koppelschicht 49 sind jeweils mit den Kapazitätsflächen 37 in der unteren äußeren Koppelschicht 11 und der oberen äußeren Koppelschicht 15 deckungsgleiche Kapazitätsflächen 50 angeordnet, die durch kapazitive Verbindungsstücke 51 zu zwei Paaren verbunden sind.

Es sei angemerkt, dass die Basiszelle 47 in Figur 11 vollständig dargestellt ist. Bei einer periodischen Wiederholung der Basiszelle 47 in Stapelrichtung befindet sich die untere äußere Koppelschicht 11 der oberen Basiszelle 47 auf der gleichen Höhe wie eine obere äußere Koppelschicht 15 der unteren Basiszelle 47. Insofern findet in der gemeinsamem Höhenlage der unteren äußeren Koppelschicht 11 und der oberen äußeren Koppelschicht 15 eine Koppelung mit nebengeordneten Basiszellen in alle vier Richtungen statt, in Figur 11 entsprechend nach vorn, hinten, links und rechts. Die in Figur 11 nach links und rechts weisenden induktiven Leitungen stellen dabei jeweils die Hälfte der nach links und rechts führenden induktiven Leitungen 46 dar.

Ferner sei angemerkt, dass durch die Basiszellen 36 und 47 die Basiszelle 28, die die Punktsymmetriegruppe Tₕ hat, in eine planare Leiterbahnstruktur mit der Punktsymmetriegruppe S₂ abgebildet wird.

Die hier beschriebenen Basiszellen eignen sich für die Massenfertigung mithilfe üblicher Verfahren der Halbleiter- und Mikrosystemtechniken, so dass sich die Metamaterialien mit den hier beschriebenen Basiszellen im industriellen Maßstab fertigen lassen.

Es sei angemerkt, dass sich mit den Basiszellen 8, 22, 36 und 47 ein Metamaterial herstellen lässt, das auch in Wellenausbreitungsrichtungen, die keinen rechten Winkel zur Stapelrichtung einnehmen und somit außerhalb der Schichtebene liegen, in einem bestimmten Frequenzbereich ein Verhalten als Metamaterial, insbesondere ein Verhalten eines Metamaterial mit negativen Brechungsindex zeigt. Insofern weist ein Metamaterial mit den Basiszellen 8, 22, 36 und 47 ein ähnliches Transmissionsverhalten wie ein Metamaterial auf, das aus den Basiszellen 1 und 28 zusammengesetzt ist und das in jede Wellenausbreitungsrichtung in einem bestimmten Frequenzbereich ein für ein Metamaterial typisches Transmissionsverhalten zeigt.

Die Leiterbahnstruktur des jeweiligen Metamaterials ist dabei vorzugsweise so ausgebildet, dass sich die Basiszellen 8, 22, 36 oder 47 in alle drei Raumrichtungen wiederholen.

Abschließend sei noch darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist.

Schließlich wird noch darauf hingewiesen, dass in den Ansprüchen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

## Patentansprüche

1. Metamaterial mit einer Vielzahl von sich wiederholenden Basiszellen (8, 22, 36, 47), die jeweils eine dreidimensionale Leiterbahnstruktur aufweisen, die für elektromagnetische Wellen mit in drei Raumdimensionen weisenden Wellenausbreitungsrichtungen das für das Metamaterial charakteristische Transmissionsverhalten zeigt,
**dadurch gekennzeichnet, dass** die Leiterbahnstruktur der Basiszelle (8, 22, 36, 47) auf wenigsten drei in einem Stapel übereinander angeordnete Leiterbahnschichten (11-15, 48, 49) verteilt ist.

2. Metamaterial nach Anspruch 1,
**dadurch gekennzeichnet, dass** sich die Schichtenfolge einer Basiszelle (8, 22, 36, 47) in Stapelrichtung periodisch wiederholt.

3. Metamaterial nach Anspruch 1 oder 2,
**dadurch gekennzeichnet, dass** zwischen den Leiterbahnschichten (11-15, 48, 49) dielektrische Abstandsschichten (9) angeordnet sind.

4. Metamaterial nach Anspruch 3,
**dadurch gekennzeichnet, dass** die dielektrische Abstandsschicht (9) den Raum zwischen den Leiterbahnschichten (11-15, 48, 49) füllt.

5. Metamaterial nach Ansprüche 1 bis 4,
**dadurch gekennzeichnet, dass** die Leiterbahnstruktur die Punktsymmetriegruppe D₄ₕ aufweist.

6. Metamaterial nach einem der Ansprüche 1 bis 5,
**dadurch gekennzeichnet, dass** die Basiszelle (8, 22) eine Grundschicht (12), eine Zwischenschicht (13) und eine Deckschicht (14) aufweist, und dass in der Grundschicht (12) und in der Deckschicht (14) in den Ecken (18) der Basiszelle (8, 28) jeweils Kapazitätsflächen (19, 23) angeordnet sind, die über induktive Komponenten (16, 20) mit einem gemeinsamen Knotenpunkt (21) in der Zwischenschicht (13) verbunden sind.

7. Metamaterial nach Anspruch 6,
**dadurch gekennzeichnet, dass** benachbarte Basiszellen (22) durch eine außenseitig an den Kapazitätsflächen (23) ausgebildete Interdigitalstruktur (24) kapazitiv gekoppelt sind.

8. Metamaterial nach Anspruch 6,
**dadurch gekennzeichnet, dass** zwischen der Grundschicht (12) und der Deckschicht (14) von in Stapelrichtung übereinander angeordneten Basiszellen (8) jeweils eine Koppelschicht (11, 15) ausgebildet ist, in der sich über mehrere Basiszellen (8) erstreckende Kapazitätsflächen (17) ausgebildet sind, durch die die Kapazitätsflächen (19) in der Grundschicht (12) und der Deckschicht (15) von benachbarten Basiszellen (8) kapazitiv gekoppelt sind.

9. Metamaterial nach einem der Ansprüche 1 bis 4,
**dadurch gekennzeichnet, dass** die Leiterbahnstruktur die Punktsymmetriegruppe S₂ aufweist.

10. Metamaterial nach Anspruch 9,
**dadurch gekennzeichnet, dass** die Basiszelle (36, 47) eine Grundschicht (12), eine Zwischenschicht (13) und eine Deckschicht (14) aufweist, wobei in der Zwischenschicht (13) zwei Kapazitätsflächen (43) ausgebildet sind, die über eine induktive Leiterbahn (44) verbunden sind und in der Grundschicht (12) und der Deckschicht (14) mit den Kapazitätsflächen (43) in der Zwischenschicht (13) kapazitiv gekoppelte Kapazitätsflächen (42, 45) ausgebildet sind, die jeweils Durchkontaktierungen (40, 41) zu Koppelflächen (11, 15) aufweisen, die der dielektrischen Verbindung der Basiszelle (36, 47) mit benachbarten Basiszellen (36, 47) dienen.

11. Metamaterial nach Anspruch 10,
**dadurch gekennzeichnet, dass** die Koppelschicht mit den Durchführungen (40, 41) über Interdigitalstrukturen (39) kapazitiv gekoppelte Kapazitätsflächen (37) verfügt, die über eine mittlere Interdigitalstruktur (38) zu Paaren verbunden sind und an die induktive Leitungen (46) angeschlossen sind, die dazu dienen, benachbarte Basiszellen (36) zu verbinden.

12. Metamaterial nach Anspruch 10,
**dadurch gekennzeichnet, dass** die Koppelschichten eine äußere Koppelschicht (48) und eine innere Koppelschicht (49) aufweisen, wobei auf der inneren Koppelschicht (48) an die Durchführungen (40, 41) angeschlossene Kapazitätsflächen (50) ausgebildet sind, die jeweils mit einem Paar von Kapazitätsflächen (37) auf der äußeren Koppelschicht (48) gekoppelt sind, wobei die Kapazitätsflächen (37) auf der äußeren Koppelschicht (48) an induktive Leitungen (46) angeschlossen sind, die der elektrischen Verbindung benachbarter Basiszellen (47) dienen.
